# EUROPEAN PATENT SPECIFICATION

(11) **EP 2 030 375 B1**
(45) Date of publication and mention of the grant of the patent: **21.12.2011**
(21) Application number: 07746811.4
(22) Date of filing: 01.06.2007
(51) Int. Cl.: H04L 12/28

(54) **Optical network device generating a multi-channel**
Optische Netzwerkeinrichtung zur Erzeugung eines Mehrkanals
Dispositif de réseau optique générant un canal multiple

(30) Priority: 01.06.2006 KR 20060049455
(43) Date of publication of application: 04.03.2009
(73) Proprietor: Infra Access Korea Co., Ltd, Bongcheon-dong, Gwanak-gu Seoul 151-719 (KR)
(72) Inventor: KIM, Jun Ho, Gangnam-gu, Seoul 135-090 (KR); PARK, Jung Beom, Songpa-gu, Seoul 138-170 (KR); BYUN, Beom Joon, Yangcheon-gu, Seoul 158-823 (KR)
(74) Representative: Riemann, Jörg
(86) International application number: PCT/KR2007/002664
(87) International publication number: WO 2007/139361

(56) References cited:
- US-A- 5 642 155
- US-B1- 6 452 945
- US-B1- 6 529 303

## Description

### Technical Field

The present invention relates, in general, to an optical network device for generating a multi-channel and, more particularly, to an optical network device for generating a multi-channel, in which a multi-channel is formed for a wired network (for example, a cable network) having limited bandwidth and the same bandwidth is redundantly used through the generated multi-channel, thereby extending the bandwidth that can be assigned to each subscriber and also improving the line speed.

### Background Art

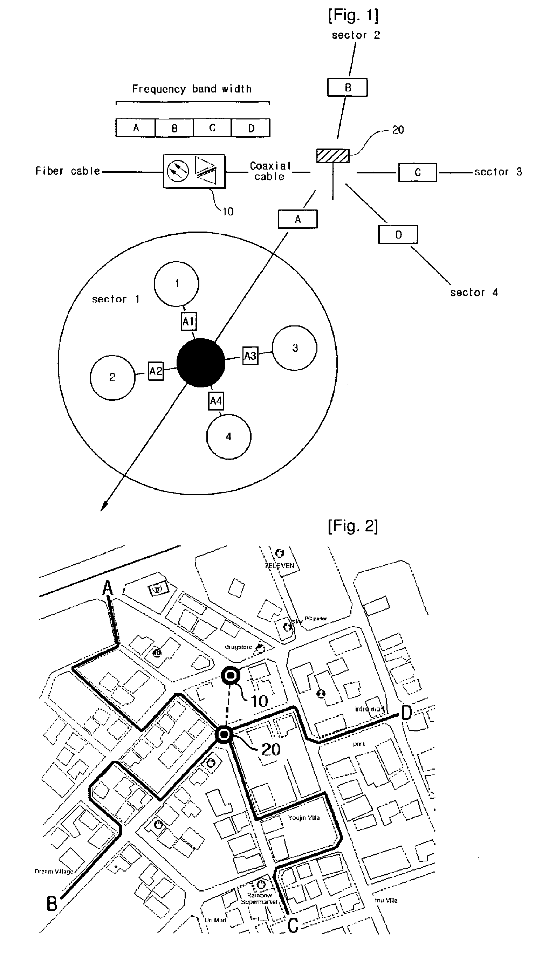

Internet communication using a cable network through which broadcasts are sent to subscribers uses a cable network that is deployed to respective subscribers' houses, therefore it has an advantage in that almost no cost is incurred compared to that based on the deployment of optical cables. Generally, in Internet communication using a cable network, a local cable broadcasting company identities a modem, provided to a subscriber, through a Cable Modem Terminal System (CMTS), and allows the identified modem to receive Internet service through the cable network. Accordingly, the cable broadcasting company divides respective subscribers into a plurality of sectors according to area, assigns to each of the sectors a frequency band that it will use for Internet communication, and allows the sector to reassign the assigned frequency band to subscriber terminals through a splitter. Accordingly, the conventional cable network has a problem in that the Internet communication speed of each subscriber decreases as the number of subscribers increases. This is described with reference to FIG. 1.

FIG. 1 conceptually illustrates a method of assigning frequencies to respective subscriber terminals in a conventional Hybrid Fiber Coaxial Cable (HFC).

Reference numeral 10 designates an Optical Network Unit (ONU) disposed between an optical cable and a coaxial cable. The ONU 10 converts signals between a cable broadcasting station connected thereto through the optical cable and a subscriber terminal connected thereto through the coaxial cable. Of the bandwidth provided from the ONU 10 to the coaxial cable, frequency bands A, B, C, and D, which can be assigned for the Internet, range from approximately 540 MHz to 900 MHz. The ONU 10 provides assigned frequency bands to a tap-off unit 20. The tap-off unit 20 distributes the assigned frequency bands to sectors 1 to 4. That is, the frequency bands A, B, C, and D are assigned to the sectors 1, 2, 3, and 4, respectively. Each of the sectors is a region in which a cable network is assigned to a plurality of subscriber terminals. In the case of the sector 1, the frequency band A is divided into frequency bands A1, A2, A3 and A4, and the resulting frequency bands A1, A2, A3, and A4 are assigned to subscriber terminals 1 to 4, respectively. That is, in the conventional Internet service provided through a wired network, the bandwidth assigned to each of the subscriber terminals 1 to 4 decreases in proportion to the number of subscribers that are connected to a unit sector (for example, sector 1), thus resulting in a reduction in the data transmission rate of the subscriber terminal. Furthermore, since the respective sectors 1 to 4 are assigned to and use the frequency bands assigned to the ONU 10, there is a problem in that the number of subscriber terminals that can be covered by the ONU 10 is limited.

FIG. 2 is a view illustrating an example in which a cable network is deployed by a cable broadcasting company.

As shown in the drawing, since the conventional cable network is deployed to provide broadcasts to subscribers through a wired connection, it is disposed radially around the ONU 10, and the end terminals of the cable network do not meet each other. A typical network is configured to have a ring topology, in which end terminals of a network meet each other, in order to secure the stability of data transmission, while a cable network is typically configured in a radial topology, in which the end terminals of the cable network are not connected to each other, because the cable network only sends broadcasts from a cable broadcasting station to subscribers. The applicant of the present invention discards the conventional network configuration method of configuring a network in such a manner that the tap-off unit 20 assigns frequency bands, assigned by the ONU 10, to the respective sectors 1 to 4 equally, and proposes an optical network device for generating a multi-channel, in which the same frequency band is assigned to the sectors 1 to 4, so that the same frequency band can be reused, thus increasing the frequency band assignable to respective subscriber terminals and also increasing the data transmission rate of respective subscriber terminal. US 5,642,155 A relates to a method and an apparatus for two-way multi-media communications over two-way capable cable-TV networks, wherein a cable-TV system is divided into Multiple Service Hubs re-using allocated frequency bands.

### Disclosure of Invention

### Technical Problem

As described above, the present invention is intended to provide an optical network device for generating a multi-channel, in which a multi-channel is generated with respect to a limited frequency band assigned for Internet service in a cable network, so that a large amount of bandwidth can be assigned to subscriber terminals that are connected to a wired network.

### Technical Solution

In order to accomplish the above object, the present invention provides an optical network device for generating a multi-channel, the optical network device being connected to a plurality of sectors, each of the sectors having one or more subscriber terminals as component members, dividing a frequency band assigned to a wired network, and providing resulting frequency bands to respective subscriber terminals, the optical network device including one or more channel cards mounted on a motherboard having a bus, and configured to allow a frequency band, assigned to any one of the sectors, to be reused for at least one remaining sector in such a way as to provide an identical frequency band to the sectors at a node where the sectors branch off, thus generating a multi-channel for the frequency band; and a media converter for converting signals between an optical network and the motherboard wherein the channel cards are configured such that at least two channel cards correspond to any one of the sectors, and the frequency band is divided according to the number of channel cards.

Preferably, the channel cards are configured such that a number of channel cards equal to a number of the sectors is provided in the motherboard.

Preferably, the optical network device further includes a channel controller for, when a communication channel access request is made by the subscriber terminal, assigning the subscriber terminal to any one of channel cards that correspond to a sector to which the subscriber terminal belongs.

Preferably, the channel controller, when a communication channel access request is made by the subscriber terminal, assigns the subscriber terminal to any one of the channel cards that correspond to a sector to which the subscriber terminal belongs, the channel controller performing channel access on the channel cards sequentially.

Preferably, the channel controller, when a communication channel access request is made by the subscriber terminal, assigns the subscriber terminal to a channel card that is selected from among channel cards corresponding to a sector to which the subscriber terminal belongs and that has a smallest number of channel setups with subscriber terminals.

Preferably, the optical network device further includes a filter connected to an output terminal of at least one channel card corresponding to the sector and configured to pass only a frequency band, assigned to only the channel card, therethrough.

The channel card includes a diplexer for separating a frequency band for Internet communication and a broadcast signal band from the frequency band assigned to the sector; a Radio Frequency (RF) unit for performing RF communication with the sector using the frequency band assigned for the Internet communication by the diplexer; and a bus interface unit for performing data communication with the media converter via a bus of the motherboard.

Preferably, the optical network device is provided at a node where the plurality of sector branches off, wherein at least one channel group corresponding to each of the plurality of sectors is formed, the channel groups comprising: a plurality of channel cards assigned to the corresponding sector of the plurality of sectors and configured to equally divide a frequency band assigned to the channel group; wherein the optical network device comprises a channel controller for assigning a subscriber terminal, belonging to the sector, to any one of the channel cards when the subscriber terminal requests network access; and wherein the channel group corresponds to each of the plurality of sectors, and reuses the frequency band, thereby forming a multi-channel for the frequency band.

Preferably, the media converter is adapted for converting signals between the channel cards and an optical cable and performing network access via the optical cable.

Preferably, the optical network device further includes a filter disposed between each of the channel cards and a splitter and configured to perform bandpass filtering on the frequency band assigned to each of the channel cards.

Preferably, the optical network device further includes a channel controller for, when a communication channel access request is made by one of the subscriber terminals, assigning the subscriber terminal to any one of channel cards that correspond to a sector to which the subscriber terminal belongs.

Preferably, the channel controller assigns the subscriber terminal to the channel cards sequentially when network access is requested by the subscriber terminal.

Preferably, the channel controller assigns the subscriber terminal to a channel card that is selected from among the channel cards and has lowest traffic when network access is requested by the subscriber terminal.

Preferably, the wired network is a Hybrid Fiber Coaxial Cable (HFC).

The channel card includes a diplexer for separating a frequency band for Internet communication and a broadcast signal band from the frequency band assigned to the sector; an RF unit for performing RF communication with the sector using the frequency band assigned for the Internet communication by the diplexer; and a bus int erface unit for performing data communication with the media converter via a bus of the motherboard.

Preferably, the optical network device further includes a MAC_PHY unit for, when the subscriber terminals request network access via the wired network, arbitrating collisions of data transmission between the subscriber terminals.

Preferably, the channel cards are in conformity with a PCI bus interface.

### Advantageous Effects

The present invention can solve a problem in which the frequency band assigned to each subscriber terminal is reduced due to a limited frequency band through an optical network device for assigning the same frequency band to respective sectors at a node where respective sectors branch off in a wired broadcasting network and a cable Internet network, each of which is divided into respective sectors. As a result, each subscriber terminal can be assigned a wider frequency band, compared to the prior art, and the rate of data transmission over the Internet can be increased significantly.

### Brief Description of the Drawings

FIG. 1 is a view conceptually illustrating a method of assigning frequencies to respective subscriber terminals in a conventional HFC;

FIG. 2 is a view illustrating an example in which a cable network is deployed by a cable broadcasting company;

FIG. 3 is a conceptual schematic block diagram of an optical network device for generating a multi-channel according to the present invention;

FIG. 4 is a conceptual block diagram illustrating an embodiment of a Multi Dwelling Unit (MDU) illustrated in FIG. 3;

FIG. 5 is a conceptual block diagram of the MDU according to another embodiment of the present invention;

FIG. 6 is a conceptual block diagram of the MDU according to still another embodiment of the present invention;

FIG. 7 is a detailed conceptual diagram of the amplifier illustrated in FIG. 3; and

FIG. 8 is a conceptual block diagram illustrating an embodiment of the channel cards illustrated in FIGS. 4 and 5.

*Description of reference numerals of principal elements in drawings*

10: optical network device 110: MDU

121: ORX 122: OTX

123: amplifier 160: media converter

### Best Mode for Carrying Out the Invention

The present invention is described in detail with reference to the accompanying drawings below.

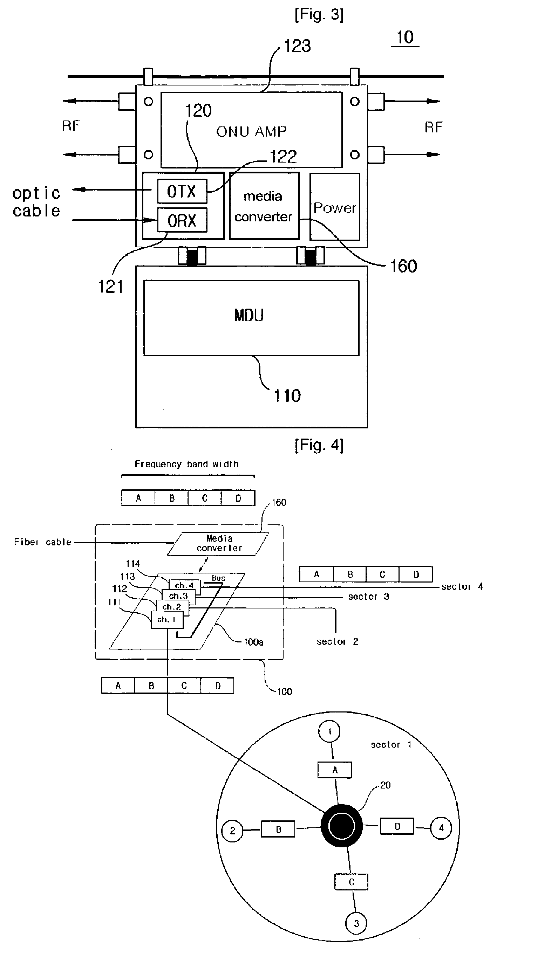

FIG. 3 is a conceptual schematic block diagram of an optical network device for generating a multi-channel according to the present invention.

The illustrated optical network device 10 includes a Multi Dwelling Unit (MDU) 110, a media converter 160, an optical transmission unit (OTX) 122, an optical reception unit (ORX) 121, and an amplifier 123. The MDU 110 assigns the same frequency band, assigned to a coaxial cable, to a plurality of sectors, thus generating a number of communication channels, that is, a multi-channel, using the same frequency band. Each of the sectors is a cable network assigned to a plurality of subscriber terminals, and has a function of distributing the frequency band, assigned by the optical network device 10, to its subscriber terminals. Although, in the prior art, an ONU divides a frequency band according to the number of sectors and distributes resulting frequency bands to respective sectors, the optical network device 10 of the present invention provides the same available frequency band to respective sectors and each of the sectors distributes the frequency band to its subscriber terminals, so that a wider frequency band can be assigned to each of the subscriber tenninals, compared to the prior art. The media converter 160 is responsible for interfacing between the ORX 121, the OTX 122 and the MDU 110. The media converter 160 converts data, received from the ORX 121, into Ethernet packets, converts Ethernet packets, received from the MDU 110, into optical signals, and then provides the optical signals to the OTX 122.

FIG. 4 is a conceptual block diagram illustrating an embodiment of the MDU 110 illustrated in FIG. 3.

The illustrated embodiment uses a network characteristic possessed by a typical wired cable network, that is, a characteristic in which a cable broadcasting station assigns a frequency band to a tap-off unit, and the tap-off unit divides the assigned frequency band according to the number of subscriber terminals that have subscribed to each sector, so that the end terminals of a cable network deployed across the sector are not connected to (are independent of) each other. In the present embodiment, the optical network device 10 is disposed at the location where the respective sectors 1 to 4 first branch off, and the disposed optical network device 10 assigns the same frequency band to the sectors 1 to 4, based on the characteristic of the cable broadcasting network. In general, the cable network divides one frequency band and provides divided frequency bands to respective sectors, so that the frequency band assigned to each of the subscriber terminals (for example, reference numeral 1 to 4) must be reduced when the number of subscribers increases, thereby resulting in a reduction in the data transmission path of each subscriber terminal. To solve this problem, in the present embodiment, channel cards 111 to 114 using the frequency band assigned by the cable broadcasting station correspond respectively to the sectors I to 4, but each of the channel cards 111 to 114 forms a communication channel with each of the sectors I to 4 through the same frequency band. For example, when the channel card 111 uses a frequency band from 975 MHz to 1025 MHz, the channel cards 112, 113, and 114 also use the same frequency band as the channel card 111, that is, a frequency range from 975 MHz to 1025 MHz. Each of the channel cards 111 to 114 has the form of an Ethernet card, which can be mounted on and removed from a motherboard 100a having a bus structure, and has a function of performing Radio Frequency (RF) communication with each of the sectors 1 to 4.

In the drawing, all the channel cards 111 to 1 14 use the same frequency band A, B, C, and D. The channel card 111 provides a tap-off unit 20, disposed in the sector 1, with a frequency band composed of A, B, C, and D. The tap-off unit 20 divides the frequency band into A, B, C, and D, and distributes the resulting frequency bands to respective subscriber terminals 1 to 4. In the event that the number of subscriber terminals is four, each of the subscriber terminals 1 to 4 can perform data communication using a frequency band that is obtained by dividing the frequency band, assigned by the channel card 111, by four. This can result in the effect of an increase in bandwidth approximately 4 times as wide as that in the prior art of FIG. 1 under the same conditions. Theoretically, the communication rate of each of the subscriber terminals 1 to 4 is increased about four times. Furthermore, if the number of channel cards mounted on the motherboard 100a is increased, the number of subscriber terminals that must be handled by each channel card is decreased, so that the frequency bandwidth assignable to each subscriber terminal is further increased. For example, in the event that eight sets of channel cards are mounted on the motherboard 100a, the frequency bandwidth assigned to each of the subscriber terminals (for example, 1 to 4) is increased approximately eight times as much as in the prior art under the same conditions (refer to FIG. 1). Although the manufacturing cost of the optical network device 10 may be expected to rise as the number of channel cards mounted in the motherboard 100a increases, the respective channel cards 111 to 114 use the same frequency band, and the frequency band that is used is the same as in the present invention, so that the same type of bandpass filters are applied to respective channel cards 111 to 114, thereby being able to reduce the unit cost of a bandpass filter. This offsets the increase in the cost of the channel cards 111 to 114. Furthermore, since the frequency bandwidth assigned to each of the subscriber terminals increases significantly, the filters do not need to be as accurate as conventional bandpass filters. This also reduces the unit manufacturing cost of the filters. As a result, the cost difference between the optical network device 10 of the present invention and the conventional ONU is insignificant.

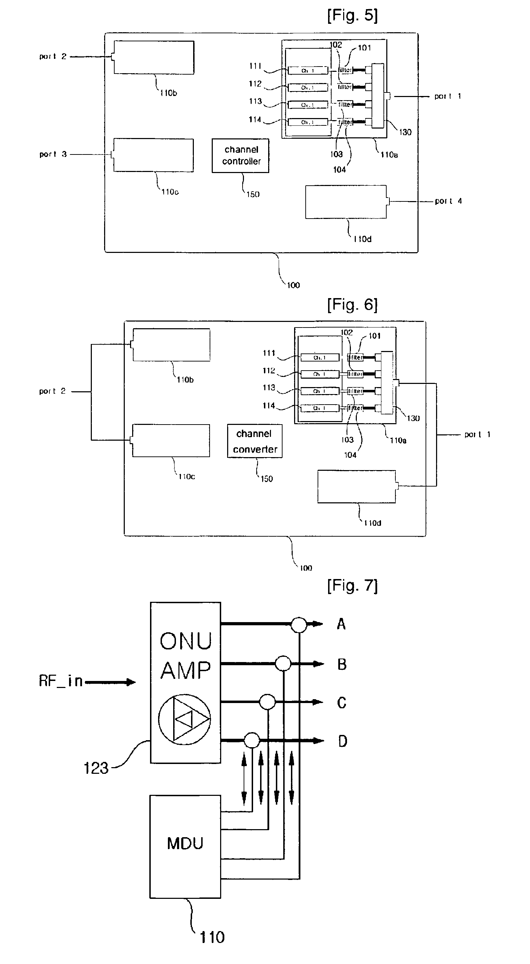

FIG. 5 is a conceptual block diagram of the MDU 110 according to another embodiment of the present invention.

The illustrated embodiment is similar to that illustrated in FIG. 4. However, in the present embodiment, channel groups 110a to 110d are formed for respective sectors and each of the channel groups 110a to 110d assigns a plurality of channel cards (for example, reference numeral 111 to 114) to a corresponding sector (for example, the sector 1). The channel cards 1.11 to 114 assigned to the channel group 11a divide and then use one of the frequency bands assigned to the channel groups 110a to 110d. In this case, the frequency bands assigned to the respective channel groups (for example, 110 to 110d) are the same, and the channel groups 110 to 110d have the same structure. Therefore, descriptions of the channel groups 110b to 110d are replaced with the description of the channel group 110a, and a redundant description thereof will be omitted.

The channel group 110a sets up a communication channel with a sector (for example, sector 1) through a port 1, and assigns the four channel cards 111 to 114 in order to form a communication channel with the sector 1. This is useful when the number of subscriber terminals located in a unit sector (for example, the sector 1) is large. If the number of subscriber terminals belonging to the unit sector (for example, the sector 1) is small, the MDU 110 is preferably implemented in the form shown in FIG. 4. The channel card can be preferably implemented in conformity with one of Peripheral Component Interconnect (PCI), which is an interface standard that has been currently widely used, PCI-express and mPCI micro PCI standards.

The channel group 110a assigns 1/4 of the assigned frequency band to each of the channel cards 111 to 114 belonging thereto. Of course, although four channel cards have been provided for the channel group 110a in the drawing, the number of channel cards may be larger than or smaller than 4. The frequency band assigned to the each of the channel cards 111 to 114 may be increased or decreased depending on the number of channel cards located in the channel group 110a. Respective channel cards 111 to 114 are connected to the port 1 through a splitter 130, and the port 1 is connected to the sector (for example, the sector 1) using a coaxial network. Therefore, each of the channel cards 111 to 114 must perform communication only in a frequency band assigned thereto. For this purpose, each of filters 101 to 104 is provided between the splitter 130 and each of the channel cards 111 to 114. Each of the filters 101 to 104 functions as a bandpass filter for the frequency band assigned to the channel card (for example, any one of 111 to 114). For example, if frequency bands of 975 MHz to 1025 MHz, 1125 MHz to 1175 MHz, 1300 MHz to 1350 MHz, and 1475 MHz to 1525 MHz are respectively assigned to the channel cards 111, 112, 113, and 114, the filters 101, 102, 103, and 104 are constructed to respectively pass the frequency bands of 975 MHz to 1025 MHz, 1125 MHz to 1175 MHz, 1300 MHz to 1350 MHz, and 1475 MHz to 1525 MHz therethrough. The frequency bands of the channel cards 111 to 114 provided in the channel group 110a are the same as channel cards (not shown) provided in the other channel groups 110b to 110d, and the filters 101 to 104 provided for the channel group 110a can be used for the other channel groups 110b to 110d. As described above, in the present invention, since respective sectors 1 to 4 use the same frequency band, the channel group 110a uses the same frequency band as the channel groups 110b, 110c, and 110d, and the channel cards provided in the channel groups 110b to 110d and the filters connected to the channel cards have the same frequency characteristics as the channel cards 111 to 114 and the filters 101 to 104 provided in the channel group 110a. Furthermore, since one frequency band assigned by the cable broadcasting company is used by several sectors 1 to 4 at the same time, each of the channel groups 110a to 110d can provide a wider frequency band to each of the sectors 1 to 4, compared to the existing ONU. Therefore, the conventional ONU, which divides a specific frequency band (for example, a frequency band from 975 MHz to 1525 MHz) according to the number of sectors and allows each of the sectors to divide a divided frequency band again according to the number of subscriber terminals, requires accurate bandpass filters in order to identify respective subscriber terminals, whereas the filters 101 to 104 according to the present embodiment do not need to be as accurate as those of the prior art. This allows the cost of the filters, mounted on the MDU 110, to be lowered significantly. Meanwhile, although, in the present embodiment, the channel groups 110a to 110d are respectively connected to the ports 1 to 4, each of the ports 1 to 4 may be connected to one or more sectors. If one port (for example, the port 1) is connected to two or more sectors (for example, the sectors 1 and 2), each of the sectors (for example, the sectors 1 and 2) bisects a frequency band assigned to one port (for example, the port 1). Even in this case, the MDU 110 according to the present embodiment forms four multi-channels for one frequency band, so that the number of subscriber terminals, which are handled by each of the sectors 1 to 4, can be reduced, and a frequency band two or more times as wide as that provided by the existing ONU can be provided to the subscriber terminals under the same conditions. That is, according to the present embodiment, a number of multi-channels proportional to the number of channel groups formed in the MDU 110 can be formed. Through this, a larger number of frequency bands can be provided to subscriber terminals belonging to each sector, and the Internet communication speed of each subscriber terminal can be enhanced.

When the subscriber terminals belonging to the sectors 1 to 4 request network access, a channel controller 150 appropriately distributes the subscriber terminals between the channel cards (for example, 111 to 114). The channel controller 150 performs the same operation on the channel cards provided in each of the channel groups 110b to 110d. The channel controller 150 assigns a subscriber terminal, belonging to each sector, to any one of the channel cards (for example, 111 to 114) that are responsible for a corresponding sector (for example, the sector 1) according to the items described below.

1) A method of sequentially assigning subscriber terminals to channel cards (for example, 111 to 114) whenever network access is requested by the subscriber terminals. The subscriber terminals are assigned to the channel cards 111 to 114 in the sequence of the channel card 111, the channel card 112, the channel card 113, and the channel card 114 whenever network access is requested by the subscriber terminals.

2) A method of assigning a subscriber terminal to a channel card having the lowest traffic among channel cards (for example, 111 to 114) when network access is requested by the subscriber terminal.

3) A method of assigning a subscriber terminal to a channel card (for example, any one of 111 to 114) to which the smallest number of subscriber terminals is assigned, when network access is requested by the subscriber terminal.

FIG. 6 is a conceptual block diagram of the MDU 110 according to still another embodiment of the present invention.

The illustrated embodiment is similar to that shown in FIG. 5, but is different in that two or more channel groups (for example, 110a, and 110b) correspond to a single port (for example, port 1). Through the coupling of the channel groups and the port, the number of subscriber terminals connected through one port can be increased, and the load of channel cards belonging to each channel group can be decreased.

Although four channel groups 110a to 110d are illustrated as corresponding to two ports (ports 1, and 2) in the drawing, the number of channel groups can be increased or decreased depending on the number of ports that can be provided in an optical network device 100. For example, assuming that four ports are provided in the optical network device 100 and each port requires two channel groups, eight channel groups can be formed in the optical network device 100. Furthermore, although four channel cards (for example, 111 to 114) are mounted in each of the channel groups 110a to 110d in the drawing, the number of channel cards mounted in each of the channel groups 110a to 110d can be increased or decreased depending on the number of subscriber terminals that are handled by the optical network device 100.

FIG. 7 is a detailed conceptual diagram of the amplifier illustrated in FIG. 3.

The illustrated amplifier 123 amplifies the frequency band assigned to each of the channel cards (for example, 111 to 114), and provides it to a MDU 110. The conventional ONU amplifies the entire frequency band assigned by a cable broadcasting station, whereas the amplifier 123 according to the present invention amplifies each frequency band assigned to each of the channel cards 111 to 114, and provides it to each of the channel cards 111 to 114. In the event that the illustrated amplifier 123 is applied to the channel groups 110a to 110d illustrated in FIG. 5, the amplifier 123 may divide the frequency band assigned to the optical network device 100 by the number of the frequency bands of channel cards provided in each of the channel groups 110a to 110d, amplify the resulting frequency bands and supply them to the respective channel groups 110a to 110d. For example, in the embodiment of FIG. 5, each channel group can be equipped with four channel cards, and frequency bands (for example, frequency bands of 975 MHz to 1025 MHz, 1125 MHz to 1175 MHz, 1300 MHz to 1350 MHz, and 1475 MHz to 1525 MHz), which are obtained by dividing a frequency band 975 MHz to 1525 MHz by four, can be amplified. According to the amplification method, the amplifier 123 can selectively perform an amplification operation only on the frequency band through which data communication with subscriber terminals is actually performed, therefore it is possible to reduce noise.

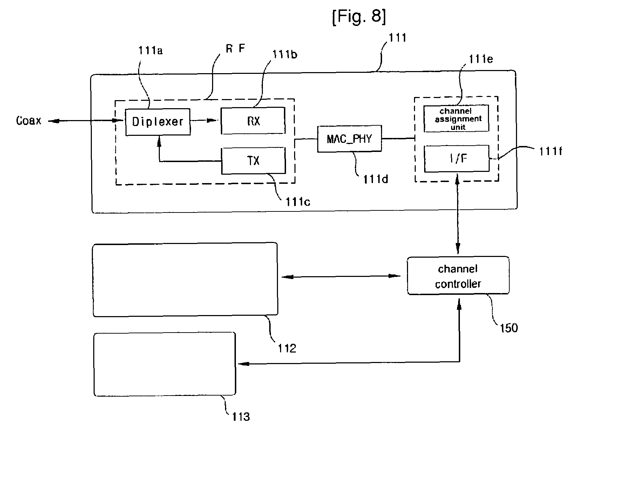

FIG. 8 is a conceptual block diagram illustrating an embodiment of the channel card illustrated FIGS. 4 and 5.

The illustrated channel card includes an RF unit RF, a MAC_PHY unit 111d, a channel assignment unit 111e, and a bus interface unit 111f.

The RF unit RF is connected to a subscriber terminal-side coaxial cable, and includes an RX unit 111b for receiving Ethernet packets from a subscriber terminal, a TX unit 111c for transmitting Ethernet packets to the subscriber terminal, and a diplexer 111a. The diplexer 111a separates a frequency band via which broadcasting data is sent and a frequency band via which Ethernet packets are sent in order to prevent broadcasting data from being received by a channel card (for example, 111) because a cable network processes the transmission of broadcasting data and Internet data. The MAC_PHY unit 111d supports the CSMA/CD protocol according to the IEEE 802.3 standard, and is equipped with a plurality of priority levels in order to support Quality of Service (Qos). Furthermore, the MAC_PHY unit 111d performs functions based on the following items in order to prevent collisions between the network access requests of respective subscriber terminals upon the occurrence of the requests.

4) A function of, when a network access request is made by each subscriber terminal, determining whether a data transmission station exists in a cable network, and determining whether to send data to the cable network according to the determination result.

5) A function of, when transmitting data to the cable network, canceling data transmission if some other station exists.

6) A function of randomly generating a transfer delay time for an Ethernet packet to be sent to each subscriber terminal so that two or more data transmission stations are not generated in a cable network.

When a subscriber terminal assigned to a channel card (for example, 111) requests network access, the channel assignment unit 111e assigns a frequency band to a corresponding subscriber terminal. The bus interface unit 111f sends Ethernet data, which is sent to or received from the subscriber terminal assigned to the channel card (for example, 111), to the media converter 160 or receives Ethernet data from the media converter 160, and is assigned a subscriber terminal in response to a control instruction from the channel controller 150.

### Industrial Applicability

As described above, the present invention can solve the problem in which a frequency band assigned to each subscriber terminal is reduced due to a limited frequency band using an optical network device for assigning the same frequency band to respective sectors at a node where respective sectors branch off in a wired broadcasting network and a cable Internet network, each of which is divided into respective sectors. Accordingly, a wider frequency band can be provided to each subscriber terminal, compared to the prior art, and the rate of data transmission over the Internet can be increased significantly.

## Claims

1. An optical network device for generating a multi-channel, the optical network device being connected to a plurality of sectors (1, 2, 3, 4), each of the sectors (1, 2, 3, 4) having one or more subscriber terminals as component members, dividing a frequency band assigned to a wired network, and providing resulting frequency bands to respective subscriber terminals, the optical network device comprising:
one or more channel cards (111, 112, 113, 114) mounted on a motherboard (100a) having a bus, and configured to allow a frequency band assigned to any one of the sectors (1, 2, 3, 4) to be re-used for at least one remaining sector (1, 2, 3, 4) in such a way as to provide an identical frequency band to the sectors (1, 2, 3, 4) at a node where the sectors (1, 2, 3, 4) branch off, thus generating a multi-channel for the frequency band; and
a media converter (160) for converting signals between an optical network and the motherboard (100a);
wherein the channel cards (111, 112, 113, 114) are configured such that at least two channel cards (111, 112, 113, 114) correspond to any one of the sectors (1, 2, 3, 4) and the frequency band is divided according to the number of channel cards (111, 112, 113, 114).

2. The optical network device as set forth in claim 1, wherein the channel cards (111, 112, 113, 114) are configured such that a number of channel cards (111, 112, 113, 114) equal to a number of the sectors (1, 2, 3, 4) is provided in the motherboard (100a).

3. The optical network device as set forth in claim 1, further comprising a channel controller (150) for, when a communication channel access request is made by the subscriber terminal, assigning the subscriber terminal to any one of channel cards (111, 112, 113, 114) that correspond to a sector (1, 2, 3, 4) to which the subscriber terminal belongs.

4. The optical network device as set forth in claim 3, wherein the channel controller (150), when a communication channel access request is made by the subscriber terminal, assigns the subscriber terminal to any one of the channel cards (111, 112, 113, 114) that correspond to a sector (1, 2, 3, 4) to which the subscriber terminal belongs, the channel controller (150) performing channel access on the channel cards (111, 112, 113, 114) sequentially.

5. The optical network device as set forth in claim 3, wherein the channel controller (150), when a communication channel access request is made by the subscriber terminal, assigns the subscriber terminal to a channel card (111, 112, 113, 114) that is selected from among channel cards (111, 112, 113, 114) corresponding to a sector (1,2, 3, 4) to which the subscriber terminal belongs and that has a smallest number of channel setups with subscriber terminals.

6. The optical network device as set forth in claim 3, further comprising a filter connected to an output terminal of at least one channel card (111, 112, 113, 114) corresponding to the sector (1, 2, 3, 4) and configured to pass only a frequency band, assigned to only the channel card (111, 112, 113, 114), therethrough.

7. The optical network device as set forth in claim 1, wherein the channel card (111, 112, 113, 114) comprises:
a diplexer (111 a) for separating a frequency band for Internet communication and a broadcast signal band from the frequency band assigned to the sector (1, 2, 3, 4);
a Radio Frequency, RF, unit for performing RF communication with the sector (1, 2, 3, 4) using the frequency band assigned for the Internet communication by the diplexer (111a); and
a bus interface unit (111 f) for performing data communication with the media converter (160) via a bus of the motherboard (100a).

8. The optical network device as set forth in claim 1, the optical network device being provided at a node where the plurality of sectors (1, 2, 3, 4) branches off,
wherein at least one channel group (110a, 110b, 110c, 110d) corresponding to each of the plurality of sectors (1, 2, 3, 4) is formed, the channel groups (110a, 110b, 110c, 110d) comprising: a plurality of channel cards (111, 112, 113, 114) assigned to the corresponding sector (1, 2, 3,4) of the plurality of sectors (1, 2, 3, 4) and configured to equally divide a frequency band assigned to the channel group (110a, 110b, 110c, 110d);
wherein the optical network device comprises a channel controller (150) for assigning a subscriber terminal, belonging to the sector (1, 2, 3, 4), to any one of the channel cards (111, 112, 113, 114) when the subscriber terminal requests network access; and
wherein the channel group (110a, 110b, 110c, 110d) corresponds to each of the plurality of sectors (1, 2, 3, 4), and reuses the frequency band, thereby forming a multi-channel for the frequency band.

9. The optical network device as set forth in claim 8, wherein the media converter (160) is adapted for converting signals between the channel cards (111, 112, 113, 114) and an optical cable and performing network access via the optical cable.

10. The optical network device as set forth in claim 8, further comprising a filter (101, 102, 103, 104) disposed between each of the channel cards (111, 112, 113, 114) and a splitter (130) and configured to perform bandpass filtering on the frequency band assigned to each of the channel cards (111,112, 113, 114).

11. The optical network device as set forth in claim 8, further comprising a channel controller (150) for, when a communication channel access request is made by one of the subscriber terminals, assigning the subscriber terminal to any one of channel cards (111, 112, 113, 114) that correspond to a sector (1, 2, 3, 4) to which the subscriber terminal belongs.

12. The optical network device as set forth in claim 11, wherein the channel controller (150) assigns the subscriber terminal to the channel cards (111, 112, 113, 114) sequentially when network access is requested by the subscriber terminal.

13. The optical network device as set forth in claim 11, wherein the channel controller (150) assigns the subscriber terminal to a channel card (111, 112, 113, 114) that is selected from among the channel cards (111, 112, 113, 114) and has lowest traffic when network access is requested by the subscriber terminal.

14. The optical network device as set forth in claim 8, wherein the wired network is a Hybrid Fiber Coaxial Cable, HFC.

15. The optical network device as set forth in claim 8, wherein the channel card (111, 112, 113, 114) comprises: a diplexer (111a) for separating a frequency band for Internet communication and a broadcast signal band from the frequency band assigned to the sector (1, 2, 3, 4); an RF unit, RF, for performing RF communication with the sector (1, 2, 3, 4) using the frequency band assigned for the Internet communication by the diplexer (111a); and a bus interface unit (111f) for performing data communication with the media converter (160) via a bus of the motherboard (100a).

16. The optical network device as set forth in claim 15, further comprising a MAC_PHY unit (111d) for, when the subscriber terminals request network access via the wired network, arbitrating collisions of data transmission between the subscriber terminals.

17. The optical network device as set forth in claim 15, wherein the channel cards (111, 112, 113, 114) are in conformity with a PCI bus interface.

## Patentansprüche

1. Optische Netzwerkvorrichtung für das Erzeugen eines Mehrfachkanals, wobei die optische Netzwerkvorrichtung mit mehreren Sektoren (1, 2, 3, 4) verbunden ist, von denen jeder eine oder mehrere Teilnehmer-Endgeräte als Komponentenelemente aufweist, wobei sie ein Frequenzband aufspaltet, das einem Kabelnetzwerk zugeordnet ist, und wobei sie die resultierenden Frequenzbänder entsprechenden Teilnehmer-Endgeräten bereitstellt, wobei die optische Netzwerkvorrichtung umfasst:
- eine oder mehrere Kanalkarten (111, 112, 113, 114), die auf einer Hauptplatine (100a), die einen Bus aufweist, montiert ist, und die vorgesehen sind, um eine Wiederverwendung eines einem beliebigen Sektor (1, 2, 3, 4) zugeordneten Frequenzbandes für wenigstens einen verbleibenden Sektor zu erlauben, so dass ein identisches Frequenzband den Sektoren (1, 2, 3, 4) an einem Knoten, wo die Sektoren (1, 2, 3, 4) abzweigen, bereitgestellt wird, wodurch ein Mehrfachkanal für das Frequenzband erzeugt wird; und
- einen Medienwandler (160) für das Wandeln von Signalen zwischen einem optischen Netzwerk und der Hauptplatine (100a),
wobei die Kanalkarten (111, 112, 113, 114) so ausgelegt sind, dass wenigstens zwei Kanalkarten (111, 112, 113, 114) jedem der Sektoren (1, 2, 3, 4) entsprechen, und das Frequenzband entsprechend der Anzahl der Kanalkarten (111, 112, 113, 114) aufgespalten ist.

2. Optische Netzwerkvorrichtung nach Anspruch 1, wobei die Kanalkarten (111, 112, 113, 114) so eingeordnet sind, dass eine Anzahl an Kanalkarten (111, 112, 113, 114) auf der Hauptplatine (100a) bereitgestellt ist, die gleich der Anzahl der Sektoren (1, 2, 3, 4) ist.

3. Optische Netzwerkvorrichtung nach Anspruch 1, weiter mit einer Kanalsteuerung (150) für das Zuordnen, wenn eine Kommunikationskanal-Zugriffsanfrage von einem Teilnehmer-Endgerät gestellt wird, des Teilnehmer-Endgeräts zu einer beliebigen Kanalkarte (111, 112, 113, 114), die einem Sektor (1, 2, 3, 4), zu dem das Teilnehmer-Endgerät gehört, entspricht.

4. Optische Netzwerkvorrichtung nach Anspruch 3, wobei die Kanalsteuerung (150), wenn eine Kommunikationskanal-Zugriffsanfrage von einem Teilnehmer-Endgerät gestellt wird, das Teilnehmer-Endgerät zu einer beliebigen Kanalkarte (111, 112, 113, 114) zuordnet, die einem Sektor (1, 2, 3, 4) entspricht, zu dem das Teilnehmer-Endgerät gehört, wobei die Kanalsteuerung (150) sequentiell einen Kanalzugriff auf die Kanalkarten (111, 112, 113, 114) durchführt.

5. Optische Netzwerkvorrichtung nach Anspruch 3, wobei die Kanalsteuerung (150), wenn eine Kommunikationskanal-Zugriffsanfrage von einem Teilnehmer-Endgerät gestellt wird, das Teilnehmer-Endgerät einer Kanalkarte (111, 112, 113, 114) zuordnet, die aus mehreren Kanalkarten ausgewählt wird, die einem Sektor (1, 2, 3, 4) entsprechen, zu dem das Teilnehmer-Endgerät gehört, und die eine kleinste Anzahl an Kanalsetups mit Teilnehmer-Endgeräten aufweist.

6. Optische Netzwerkvorrichtung nach Anspruch 3, weiter mit einem Filter, der mit einem Ausgangsterminal wenigstens einer Kanalkarte (111, 112, 113, 114) verbunden ist, die dem Sektor (1, 2, 3, 4) entspricht, und der vorgesehen ist, um nur ein Frequenzband passieren zu lassen, das nur der Kanalkarte (111, 112, 113, 114) zugeordnet ist.

7. Optische Netzwerkvorrichtung nach Anspruch 1, wobei die Kanalkarte (111, 112, 113, 114) umfasst:
- einen Diplexer (111a) für das Trennen eines Frequenzbandes für Internetkommunikation und eines Rundfunksignalbandes vom Frequenzband, das dem Sektor (1, 2, 3, 4) zugeordnet ist;
- eine Radiofrequenz (RF)-Einheit für das Durchführen einer RF-Kommunikation mit dem Sektor (1, 2, 3, 4) unter Verwendung des durch den Diplexer (111a) für die Internetkommunikation zugeordneten Frequenzbandes; und
- eine Busschnittstelleneinheit (111f) für das Durchführen von Datenkommunikation mit dem Medienwandler (160) über einen Bus der Hauptplatine (100a).

8. Optische Netzwerkvorrichtung nach Anspruch 1, wobei die optische Netzwerkvorrichtung an einem Knoten bereitgestellt ist, wo die mehreren Sektoren (1, 2, 3, 4) abzweigen,
wobei wenigstens eine Kanalgruppe (110a, 110b, 110c, 110d), die jeder der mehreren Sektoren (1, 2, 3, 4) entspricht, gebildet ist, und wobei die Kanalgruppen (110a, 110b, 110c, 110d) umfasst:
mehrere Kanalkarten (111, 112, 113, 114), die einem entsprechenden Sektor (1,2, 3, 4) der mehreren Sektoren (1, 2, 3, 4) zugeordnet sind, und die vorgesehen sind, um das der Kanalgruppe (110a, 110b, 110c, 110d) zugeordnete Frequenzband gleichmäßig zu teilen; wobei die optische Netzwerkvorrichtung eine Kanalsteuerung (15) für das Zuordnen eines Teilnehmer-Endgeräts, das zum Sektor (1, 2, 3, 4) gehört, zu einer beliebigen Kanalkarte (111, 112, 113, 114), wenn das Teilnehmer-Endgerät einen Netzwerkzugriff anfragt, umfasst.

9. Optische Netzwerkvorrichtung nach Anspruch 8, wobei der Medienwandler (160) vorgesehen ist, um Signale zwischen den Kanalkarten (111, 112, 113, 114) und einem optischen Kabel zu wandeln, und um einen Netzwerkzugriff über das optische Kabel durchzuführen.

10. Optische Netzwerkvorrichtung nach Anspruch 8, weiter mit einem Filter (101, 102, 103, 104), der zwischen jeder der Kanalkarten (111, 112, 113, 114) und einem Splitter (130) angeordnet ist und der vorgesehen ist, um eine Bandpassfilterung auf einem Frequenzband durchzuführen, das jeder der Kanalkarten (111, 112, 113, 114) zugeordnet ist.

11. Optische Netzwerkvorrichtung nach Anspruch 8, weiter mit einer Kanalsteuerung (150) für das Zuordnen, wenn eine Kommunikationskanal-Zugriffsanfrage von einem der Teilnehmer-Endgeräte gestellt wird, des Teilnehmer-Endgeräts zu einer beliebigen Kanalkarte (111, 112, 113, 114), die einem Sektor (1, 2, 3, 4) entspricht, zu dem das Teilnehmer-Endgerät gehört.

12. Optische Netzwerkvorrichtung nach Anspruch 11, wobei die Kanalsteuerung (150) das Teilnehmer-Endgerät sequentiell einer Kanalkarte (111, 112, 113, 114) zuordnet, wenn vom Teilnehmer-Endgerät ein Netzwerkzugriff angefragt wird.

13. Optische Netzwerkvorrichtung nach Anspruch 11, wobei die Kanalsteuerung (150) das Teilnehmer-Endgerät einer Kanalkarte (111, 112, 113, 114) zuordnet, die aus mehreren Kanalkarten (111, 112, 113, 114) ausgewählt wird und ein geringstes Verkehrsaufkommen aufweist, wenn vom Teilnehmer-Endgerät ein Netzwerkzugriff angefragt wird.

14. Optische Netzwerkvorrichtung nach Anspruch 8, wobei das Kabelnetzwerk ein HFC ("Hybrid Fiber Coaxial")-Kabel ist.

15. Optische Netzwerkvorrichtung nach Anspruch 8, wobei die Kanalkarte (111, 112, 113, 114) umfasst: einen Diplexer (111a) für das Trennen eines Frequenzbandes für Internetkommunikation und eines Rundfunksignalbandes vom Frequenzband, das dem Sektor (1, 2, 3, 4) zugeordnet ist; eine RF-Einheit für das Durchführen einer RF-Kommunikation mit dem Sektor (1, 2, 3, 4) unter Verwendung des durch den Diplexer (111a) für die Internetkommunikation zugeordneten Frequenzbandes; und eine Busschnittstelleneinheit (111f) für das Durchführen von Datenkommunikation mit dem Medienwandler (160) über einen Bus der Hauptplatine (100a).

16. Optische Netzwerkvorrichtung nach Anspruch 15, weiter mit einer MAC_PHY-Einheit (111d) für das Entscheiden über Kollisionen von Datenübertragungen zwischen den Teilnehmer-Endgeräten, wenn die Teilnehmer-Endgeräte Netzwerkzugriff über das Kabelnetzwerk anfragen.

17. Optische Netzwerkvorrichtung nach Anspruch 15, wobei die Kanalkarten (111, 112, 113, 114) mit einer PCI-Busschnittstelle konform sind.

## Revendications

1. Dispositif de réseau optique pour générer un multicanal, le dispositif de réseau optique étant connecté à une pluralité de secteurs (1, 2, 3, 4), chacun des secteurs (1, 2, 3, 4) ayant une ou plusieurs bornes abonnées à titre d'éléments constitutifs, divisant une bande de fréquences attribuée à un réseau câblé, et fournissant des bandes de fréquences résultantes à des bornes abonnées respectives, le dispositif de réseau optique comprenant :
un ou plusieurs cartes de canal (111, 112, 113, 114) montées sur une carte-mère (100a) ayant un bus, et configurées pour permettre qu'une bande de fréquences attribuée à l'un quelconque des secteurs (1, 2, 3, 4) soit réutilisée pour au moins un secteur restant (1, 2, 3, 4) de manière à fournir une bande de fréquences identique aux secteurs (1, 2, 3, 4) à un noeud où les secteurs (1, 2, 3, 4) sont ramifiés, générant ainsi un multiple-canal pour la bande de fréquences ; et
un convertisseur de médias (160) pour convertir des signaux entre un réseau optique et la carte-mère (100a) ;
dans lequel les cartes de canal (111, 112, 113, 114) sont configurées de telle manière qu'au moins deux cartes de canal (111, 112, 113, 114) correspondent à l'un quelconque des secteurs (1, 2, 3, 4) et la bande de fréquences est divisée en accord avec le nombre de cartes de canal ( 111, 112, 113, 114).

2. Dispositif de réseau optique selon la revendication 1, dans lequel les cartes de canal (111, 112, 113, 114) sont configurées de telle façon qu'un nombre de cartes de canal (111, 112, 113, 114) égal au nombre des secteurs (1, 2, 3, 4) est prévu dans la carte-mère (100a).

3. Dispositif de réseau optique selon la revendication 1, comprenant en outre un contrôleur de canal (150) pour, quand une requête d'accès à un canal de communication est effectuée par la borne abonnée, attribuer la borne abonnée à l'une quelconque des cartes de canal (111, 112, 113, 114) qui correspondent à un secteur (1, 2, 3, 4) auquel appartient la borne abonnée.

4. Dispositif de réseau optique selon la revendication 3, dans lequel le contrôleur de canal (150), quand une requête d'accès à un canal de communication est effectuée par la borne abonnée, attribue la borne abonnée à l'une quelconque des cartes de canal (111, 112, 113, 114) qui correspondent à un secteur (1, 2, 3, 4) auquel appartient la borne abonnée, le contrôleur de canal (150) exécutant l'accès de canal sur les cartes de canal (111, 112, 113, 114) séquentiellement.

5. Dispositif de réseau optique selon la revendication 3, dans lequel le contrôleur de canal (150), quand une requête d'accès à un canal de communication est effectuée par la borne abonnée, attribue la borne abonnée à une carte de canal (111, 112, 113, 114) qui est sélectionnée parmi des cartes de canal (111, 112, 113, 114) correspondant à un secteur (1, 2, 3, 4) auquel appartient la borne abonnée et qui présente le plus petit nombre de dispositions de canaux avec bornes abonnées.

6. Dispositif de réseau optique selon la revendication 3, comprenant en outre un filtre connecté à une borne de sortie d'au moins une carte de canal (111, 112, 113, 114) correspondant au secteur (1, 2, 4, 3, 4) et configuré pour laisser passer uniquement une bande de fréquences, attribuée uniquement à la carte de canal (111, 112, 113, 114) à travers elle-même.

7. Dispositif de réseau optique selon la revendication 1, dans lequel la carte de canal (111, 112, 113, 114) comprend :
un duplexeur (111a) pour séparer une bande de fréquences destinée à la communication Internet et une bande pour signaux radiodiffusés à partir de la bande de fréquences attribuée au secteur (1, 2, 3, 4) ;
une unité à radiofréquences RF pour exécuter une communication RF avec le secteur (1, 2, 3, 4) utilisant la bande de fréquences attribuée pour la communication Internet par le duplexeur (111a) ; et
une unité interface de bus (111f) pour exécuter une communication de données avec le convertisseur de médias (160) via un bus de la carte-mère (100a).

8. Dispositif de réseau optique selon la revendication 1, le dispositif de réseau optique étant prévu à un noeud auquel la pluralité de secteurs (1, 2, 3, 4) sont ramifiés,
dans lequel au moins un groupe de canaux (110a, 110b, 110c, 110b) correspondant à chacun de la pluralité de secteurs (1, 2, 3, 4) est formé, les groupes de canaux (110a, 110b, 110c, 110d) comprenant : une pluralité de cartes de canal (111, 112, 113, 114) attribuées aux secteurs correspondants (1, 2, 3, 4) de la pluralité de secteurs (1, 2, 3, 4) et configurées pour diviser également une bande de fréquences attribuée au groupe de canaux (110a, 110b, 110c, 110e) ;
dans lequel le dispositif de réseau optique comprend un contrôleur de canal (150) pour attribuer une borne abonnée, appartenant au secteur (1, 2, 3, 4) à l'une quelconque des cartes de canal (111, 112, 113, 114) quand la borne abonnée envoie une requête d'accès au réseau ; et
dans lequel le groupe de canaux (110a, 110b, 110c, 110d) correspond à chacun de la pluralité de secteurs (1, 2, 3, 4), et réutilise la bande de fréquences, formant ainsi un multicanal pour la bande de fréquences.

9. Dispositif de réseau optique selon la revendication 8, dans lequel le convertisseur de médias (160) est adapté pour convertir des signaux entre les cartes de signal (111, 112, 113, 114) et un câble optique pour effectuer un accès au réseau via le câble optique.

10. Dispositif de réseau optique selon la revendication 8, comprenant en outre un filtre (101, 102, 103, 104) disposé entre chacune des cartes de canal (111, 112, 113, 114), et un diviseur (130), et configuré pour exécuter un filtrage passe-bande sur la bande de fréquences attribuée à chacune des cartes de canal (111, 112, 113, 114).

11. Dispositif de réseau optique selon la revendication 8, comprenant en outre un contrôleur de canal (150) pour, quand une requête d'accès à un canal de communication est effectuée par l'une des bornes abonnées, attribuer la borne abonnée à l'une quelconque des cartes de canal (111, 112, 113, 114) qui correspondent à un secteur (1, 2, 3, 4) auquel appartient la borne abonnée.

12. Dispositif de réseau optique selon la revendication 11, dans lequel le contrôleur de canal (150) attribue la borne abonnée aux cartes de canal (111, 112, 113, 114) séquentiellement quand un accès au réseau est requis par la borne abonnée.

13. Dispositif de réseau optique selon la revendication 11, dans lequel le contrôleur de canal (150) attribue la borne abonnée à une carte de canal (111, 112, 113, 114) qui est sélectionnée parmi les cartes de canal (111, 112, 113, 114) et présente le plus faible trafic quand un accès au réseau est requis par la borne abonnée.

14. Dispositif de réseau optique selon la revendication 8, dans lequel le réseau câblé est un câble coaxial à fibre hybride (HFC).

15. Dispositif de réseau optique selon la revendication 8, dans lequel la carte de canal (111, 112, 113, 114) comprend : un duplexeur (111a) pour séparer une bande de fréquences pour la communication Internet et une bande pour signal radiodiffusé depuis la bande de fréquences attribuée au secteur (1, 2, 3, 4) ; une unité à radiofréquences (RF) pour exécuter une communication RF avec le secteur (1, 2, 3, 4) en utilisant la bande de fréquences attribuée pour la communication Internet par le duplexeur (111a) ; et une unité interface de bus (111 f) pour exécuter une communication de données avec le convertisseur de médias (160) via un bus de la carte-mère (100a).

16. Dispositif de réseau optique selon la revendication 15, comprenant en outre une unité MAC_PHY (111d) pour, quand les bornes abonnées requièrent un accès au réseau via le réseau câblé, arbitrer des collisions de transmission de données entre les bornes abonnées.

17. Dispositif de réseau optique selon la revendication 15, dans lequel les cartes de canal (111, 112, 113, 114) sont en conformité avec une interface de bus PCI.
